Europäisches Patentamt

European Patent Office

Office européen des brevets

(11) Publication number: **0 229 601**

**A1**

## EUROPEAN PATENT APPLICATION

(21) Application number: **86850407.7**

(22) Date of filing: **26.11.86**

(51) Int. Cl.⁴: **G01D 5/16** , H01B 7/10 , B25J 13/08

(30) Priority: **19.12.85 SE 8506027**

(43) Date of publication of application:
**22.07.87 Bulletin 87/30**

(84) Designated Contracting States:
**CH DE FR GB LI NL SE**

(71) Applicant: **AKTIEBOLAGET ELECTROLUX
Luxbacken 1
S-105 45 Stockholm(SE)**

(72) Inventor: **Öhman, Carl Gustaf
Talgoxevägen 8
S-597 00 Atvidaberg(SE)**

(74) Representative: **Hagelbäck, Evert Isidor et al
c/o AB Electrolux Patentavdelningen
S-105 45 Stockholm(SE)**

(54) A touch indicating device.

(57) A touch indicating device comprises an elongated strip (11), or the like, of an electrically resistive material and a metal frame (10) arranged at a distance from the strip. The strip is supported with the metal frame by a carrier, for example an apparatus, a wall or a vehicle. The ends of the strip are connected to a voltage source (V1). Moreover, upon touch the strip is arranged to be moved against the metal frame to apply to the frame a potential which depends on the position of the contact point.

Fig.1

EP 0 229 601 A1

Xerox Copy Centre

## A touch indicating device

The present invention refers to a touch indicating device.

In various connections it may be of interest to indicate the touch of a fixed or a movable object. Moreover, it may be desireable to indicate the position of contact on the object.

For example, in mobile robots it is important to be able to indicate if the robot strikes against an obstacle of some kind and also the point of contact along the outer periphery of the robot. This information is of importance for the robot to be able to move backwards in a direction away from the obstacle and then to perform an evasive action around the obstacle.

The object of the invention is to provide a device of the kind indicated which meets with the desires presented. The object will be achieved in a device having the characterizing features indicated in claim 1. Preferred embodiments appear from the appending sub-claims.

The invention will now be described in detail in connection with an embodiment with reference to the enclosed drawings, in which Fig. 1 - schematically shows the set-up of a touch indicating device. Fig. 2 is a detail view schematically showing how the device is effected when striking against an obstacle. Fig. 3 is an electric circuit diagram for the device comprising means which converts an analog signal emitted by the device into digital form.

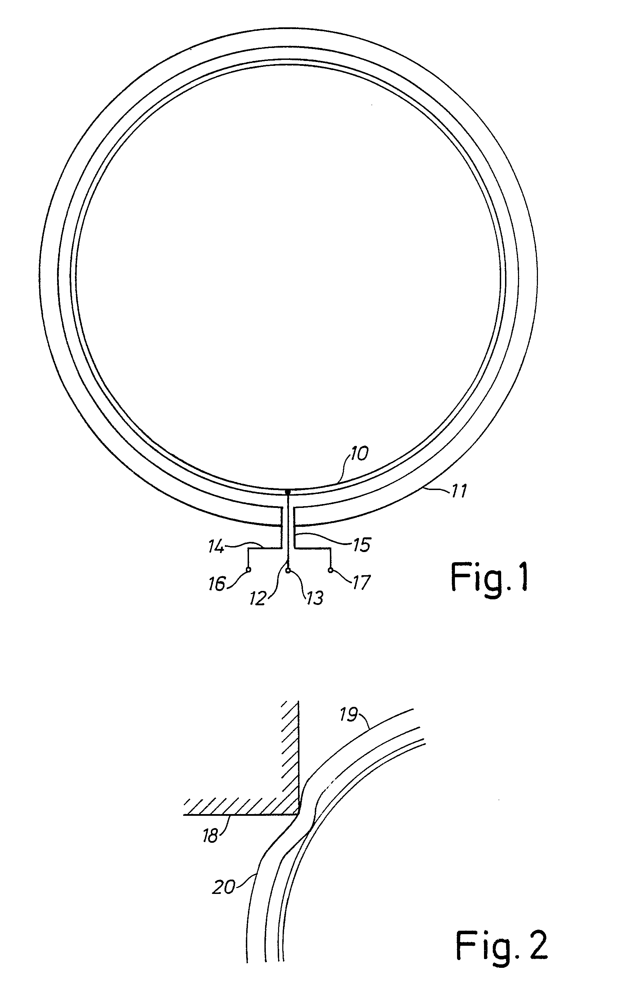

The touch indicating device according to Fig. 1 comprises a metal frame 10 and at a distance therefrom an annular strip, border, or the like, 11 of an electrically resistive material, for example an electrically conducting rubber material. Distance elements not shown, ensure that normally the metal frame is insulated from the strip 11. The distance elements are constructed such that upon external influence the strip can resiliently move into contact with the metal frame and when the influence ceases the strip by resilient force can move back to its original position. By a conductur 12 the metal frame is connected to a terminal 13. In the same way the two ends of the strip via conductors 14,15 are connected to terminals 16,17.

In the embodiment described the device according to Fig. 1 is mounted on a mobil robot, not shown. Then, the metal frame 10 and the strip 11 are arranged as unit to surround the robot at all sides like a bumper in order to indicate if during its movement the robot hits any obstacle. The metal frame and the strip are in a suitable way insulated from the robot.

According to the principle of invention the strip 11 forms a resistance path which when an obstacle 18 is contacted will be divided into two parts 19,20. If a voltage is applied on the terminals 16,17, then the metal frame will take potential determined by the position of the contact point. This potential is an analog measurement value which in the practical case has to be converted to a digital value to be treated by the control unit, usually a microcomputer, controlling the movements of the robot.

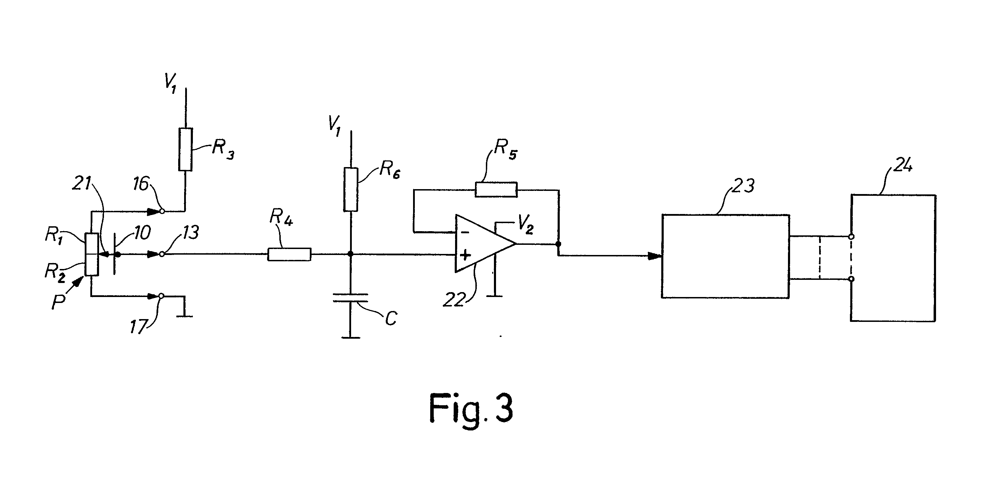

In Fig. 3 a coupling is shown which handles the converting of the analog potential to a digital number. Here, the strip 11 is represented by the potentiometer P having the two resistance parts R1,R2 - (corresponding to parts 19,20 of Fig. 2). The ends of the potentiometer are connected to terminals 16 and 17, respectively, the latter being connected to system ground. Via a resistor R3 the terminal 16 is connected to the voltage V1, for example being +5V. The metal frame 10 contacts the resistance path of the potentiometer at a point towards which an arrow 21 points which represents the movable slide of the potentiometer. As before, the metal frame is connected to the terminal 13 which in turn via a resistor R4 is connected to the positive input of an operational amplifier 22 coupled as a buffer. The negative input of the amplifier is via a resistor R5 connected to the output of the amplifier. Further, the positive input is connected to the voltage V1 via a resistor R6 and to the system ground via a capacitor C. The components R4, C form a low pass filter for suppression of transients while the resistor R6 is a so-called pull-up resistor for applying the voltage V1 to the positive input of the amplifier when no contact is being indicated. The power supply of the amplifier is performed by connecting it to the voltage V2, in the example +10V, and to the system ground. The output of the amplifier is transferred to an analog-digital convertor 23 emitting at its output a digital signal having a resolution of 8 bits, for exemple. This signal is led to a microcomputer 24.

In the example given the resistance path - (R1 + R2) of the strip and the resistor R3 can amount to 10 Kohm. The resistor R4 and R5 have been chosen to 33 Kohm and the resistor R6 to 1 Mohm. With the resistance values given and with V1 amounting to +5V voltages in the interval 0-2,5 V will be applied to the metal frame at a collision. The corresponding interval applied to the analog-digital converter is 0-5,0V and is converted at a resolution of 8 bits. The whole periphery (360°) of the robot can then be reproduced with, as a total, 128 levels. Then, the resolution will be 360/128 = slightly less than 3 degrees which is quite sufficient for the application given. In the microcomputer this means that words in excess of 128 represent "no collision".

In alternative applications the unit consisting of the strip 11 and the metal frame 10 can be mounted on a wall, a machine or an apparatus to be watched. A touch of the unit can be registered to start an alarm, for instance, or to operate a process control device.

In the example given the device is supplied from a D.C. source. However, it would also be possible to use an A.C. voltage.

In this case a rectifier device has to be added to the diagram of Fig. 3. Such a device can be connected between the terminal 13 and the resistor R4.

## Claims

1. A touch indicating device, **characterized** in that an elongated strip (11), or the like, made of an electrically resistive material is arranged at a distance from a metal frame (10), the strip together with the metal frame being supported by a carrier, for example an apparatus, a wall or a vehicle, the ends of the resistive strip (11) being connected to a voltage source, wherein the strip when touched being arranged to be resiliently moved against the metal frame (10) to apply to the frame a potential which depends on the position of the point of contact.

2. A device according to claim 1, **characterized** in that the electrically resistive material is an electrically conducting rubber material.

3. A device according to any of claims 1 and 2, **characterized** in that via an interface circuit - (R4,R6,C, R5,22) the metal frame (10) is connected to an A/D converter (23) which converts the potential of the metal frame (10) developed upon a touch into digital form.

4. A device according to claim 3, **characterized** in that the voltage source emits a D.C. voltage, the interface circuit comprising an operational amplifier (22) coupled as a buffer, the metal frame (10) being connected to the positive input of the amplifier via a low-pass filter (R4,C).

5. A device according to any of the preceeding claims, **characterized** in that it is mounted on a mobil robot to cover the whole outer periphery of the robot like a bumper.

Fig.1

Fig. 2

Fig. 3

0 229 601

## DOCUMENTS CONSIDERED TO BE RELEVANT

EP 86850407.7

| Category | Citation of document with indication. where appropriate, of relevant passages | Relevant to claim | CLASSIFICATION OF THE APPLICATION (Int. Cl.4) |
|---|---|---|---|
| X | DE - B2 - 2 061 154 (METRITAPE)<br>* Column 4, line 57 - column 5, line 28; column 6, lines 15-46; fig. 1,3,11,14,15,17, 19,20 *<br>-- | 1,3 | G 01 D 5/16<br>H 01 B 7/10<br>B 25 J 13/08 |
| X | GB - A - 2 077 471 (FIBUN)<br>* Page 1, lines 72-93; fig. 1-3 *<br>-- | 1,2 | |
| A | EP - A1 - 0 054 406 (MOORE)<br>* Claim 1; fig. 1-5 *<br>---- | 1-3 | |
| | | | **TECHNICAL FIELDS SEARCHED (Int. Cl 4)**<br><br>G 01 D 5/00<br>B 25 J<br>G 05 D 3/00<br>G 06 F 3/00<br>G 06 K 11/00<br>G 08 B 13/00<br>H 01 B 7/00<br>H 01 C 10/00<br>H 01 H |

The present search report has been drawn up for all claims

| Place of search | Date of completion of the search | Examiner |
|---|---|---|
| VIENNA | 19-03-1987 | KUTZELNIGG |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82